# EUROPÄISCHE PATENTSCHRIFT

(11) **EP 3 363 705 B1**
(45) Veröffentlichungstag und Bekanntmachung des Hinweises auf die Patenterteilung: **04.06.2025**
(21) Anmeldenummer: 18157085.4
(22) Anmeldetag: 16.02.2018
(51) Int. Cl.: B60W 30/08, B60W 50/14, B60W 50/16

(54) **VERFAHREN ZUM AKTIVIEREN MINDESTENS EINER FUNKTION EINES KRAFTFAHRZEUGS, FAHRERASSISTENZSYSTEM UND KRAFTFAHRZEUG**
METHOD FOR ACTIVATING AT LEAST ONE FUNCTION OF A MOTOR VEHICLE, DRIVER ASSISTANCE SYSTEM AND MOTOR VEHICLE
PROCÉDÉ D'ACTIVATION D'AU MOINS UNE FONCTION D'UN VÉHICULE AUTOMOBILE, SYSTÈME D'AIDE À LA CONDUITE ET VÉHICULE AUTOMOBILE

(30) Priorität: 16.02.2017 DE 102017103131
(43) Veröffentlichungstag der Anmeldung: 22.08.2018
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)
(74) Vertreter: Pothmann, Karsten

(56) Entgegenhaltungen:
- DE-A1- 102011 082 483
- DE-A1- 102014 111 951
- DE-A1- 102015 110 381

## Beschreibung

Die Erfindung betrifft ein Verfahren zum Aktivieren mindestens einer Funktion eines Kraftfahrzeugs. Weiterhin betrifft die Erfindung auch einen Fahrerassistenzsystem für ein Kraftfahrzeug sowie ein Kraftfahrzeug mit einem Fahrerassistenzsystem.

Aus dem Stand der Technik ist es bekannt, dass Abstände oder Entfernungen zu Objekten oder Hindernissen in der Umgebung eines Kraftfahrzeugs detektiert werden können, und in Abhängigkeit von einem solchen Abstand, beispielsweise wenn dieser Abstand einen Grenzwert unterscheidet, eine Funktion eines Kraftfahrzeugs, wie beispielsweise das Ausgeben einer Warnmeldung, aktiviert wird. Ein solches Verfahren ist beispielsweise in der DE 198 43 564 A1 und der US 6,433,679 B1 beschrieben. Auch die DE 10 2009 058 528 A1 beschreibt ein ähnliches Verfahren, bei welchem bei Erfülltsein eines bestimmten Kriteriums ein Warnsignal durch die Ausgabeeinrichtung eines Kraftfahrzeugs ausgegeben wird. Dieses Kriterium kann darin bestehen, dass innerhalb eines vorgegebenen Zeitintervalls der Abstand zwischen dem Objekt und dem Kraftfahrzeug sinkt, der momentane Wert des Abstands zwischen dem Objekt und dem Kraftfahrzeug einen vorgegebenen Schwellwert unterschreitet oder die Verringerung des Abstands pro Zeiteinheit eine vorgegebene Schwelle überschreitet.

Naturgemäß treten im Kraftfahrzeug Hardware-bedingt immer Latenzzeiten bei der Aktivierung von Funktionen auf. Im Zusammenhang mit den beschriebenen Kollisionsvermeidungssystemen bedeutet dies also, dass für den Fall, dass ein Warnsignal ausgegeben werden soll, sobald ein detektiertes Objekt einen bestimmten Abstand zum Kraftfahrzeug unterschreitet, dieses Warnsignal bedingt durch Latenzzeiten erst ausgegeben wird, wenn der tatsächliche Abstand zum Objekt deutlich geringer erst als dieser vorbestimmte Abstand oder Grenzwert. Gerade im Zusammenhang mit Kollisionswarnsystemen kann dies verheerende Folgen haben, da dann beispielsweise der Fahrer viel zu spät auf ein Objekt oder Hindernis aufmerksam gemacht wird, um noch rechtzeitig reagieren zu können.

Um solche Latenzzeiten zu reduzieren beschreibt die US 2009/0 254 260 A1 ein System, welches zu Umfelderfassung Ultraschallsensoren verwendet. Zur Reduktion der Latenzzeiten der Ultraschallsensoren werden diese in verschiedenen Betriebsmodi betrieben, welche in Abhängigkeit von der Kraftfahrzeuggeschwindigkeit gewählt werden.

Die DE 10 2014 111 951 A1 zeigt ein Verfahren zum Warnen eines Fahrers eines Kraftfahrzeugs vor der Anwesenheit eines Objekts in einer Umgebung des Kraftfahrzeugs mittels eines Fahrerassistenzsystems, bei welchem eine Position des Objekts mittels einer Sensoreinrichtung ermittelt wird, ein voraussichtlicher Fahrschlauch des Kraftfahrzeugs ermittelt wird, anhand der ermittelten Position des Objekts und des ermittelten Fahrschlauchs ein Kollisionsabstand, welcher einen Abstand zwischen dem Kraftfahrzeug und dem Objekt beim Bewegen des Kraftfahrzeugs innerhalb des ermittelten Fahrschlauchs beschreibt, ermittelt wird, ein Wert für einen Mindestabstand zwischen dem Kraftfahrzeug und dem Objekt ermittelt wird und ein Warnsignal ausgegeben wird, falls der Wert für den Mindestabstand einen vorbestimmten Grenzwert unterschreitet, wobei der ermittelte Wert für den Mindestabstand in Abhängigkeit von dem ermittelten Kollisionsabstand angepasst wird.

Aufgabe der vorliegenden Erfindung ist es, ein Verfahren zum Aktivieren mindestens einer Funktion eines Kraftfahrzeugs, ein Fahrerassistenzsystem und ein Kraftfahrzeug bereitzustellen, welche eine Reduktion des Einflusses von Latenzzeiten auf die Aktivierung von Funktionen auf möglichst einfache Weise ermöglichen.

Diese Aufgabe wird gelöst durch ein Verfahren, ein Fahrerassistenzsystem und ein Kraftfahrzeug mit den Merkmalen gemäß den jeweiligen unabhängigen Ansprüchen. Vorteilhafte Ausführungen der Erfindung sind Gegenstand der abhängigen Patentansprüche, der Beschreibung und der Figuren.

Bei einem erfindungsgemäßen Verfahren zum Aktivieren mindestens einer Funktion eines Kraftfahrzeugs wird eine erste Entfernung des Kraftfahrzeugs zu mindestens einem Objekt in einer Umgebung des Kraftfahrzeugs bestimmt. Dabei stellt die erste Entfernung einen minimalen Abstand zwischen dem Kraftfahrzeug und dem mindestens einen Objekt dar. Weiterhin wird eine zweite Entfernung prognostiziert, die eine Weglänge von der aktuellen Position des Kraftfahrzeugs bis zu einer Kollision mit dem mindestens einen Objekt darstellt. Weiterhin wird überprüft, ob sich die zweite Entfernung innerhalb einer vorbestimmten Zeitdauer verringert, und falls die Überprüfung ergibt, dass sich die zweite Entfernung verringert, die bestimmte erste Entfernung verringert wird, wodurch eine verringerte dritte Entfernung bereitgestellt wird, und wobei weiterhin zur Kompensation einer Latenzzeit zwischen einem Initiieren des Aktivierens der mindestens einen Funktion und einem Ausführen der mindestens einen Funktion die mindestens eine Funktion des Kraftfahrzeugs in Abhängigkeit von der verringerten dritten Entfernung aktiviert wird.

Die erste Entfernung stellt damit den kürzesten Abstand zwischen dem Kraftfahrzeug und dem detektierten Objekt dar, während die zweite Entfernung die Distanz bis zur Kollision, auch Distance to Collision (DTC) genannt, betrifft. Die Erfindung beruht dabei auf der Erkenntnis, dass sich durch eine Verringerung des erfassten minimalen Abstands effektiv die Latenzzeit kompensieren lässt. Wird also beispielsweise ein minimaler Abstand von 35 Zentimeter zum Objekt gemessen, so wird dieser bei der Weiterverarbeitung behandelt als würde er beispielsweise nur 30 Zentimeter betragen. Damit können Funktionen, die vorzugsweise zur Kollisionsvermeidung dienen, bereits früher ausgelöst werden, wodurch sich Latenzzeit zwischen dem Auslösen und dem tatsächlichen Ausführen einer solchen Funktion effektiv kompensieren lassen. Die Latenzzeiten sind damit zwar immer noch vorhanden, werden aber durch die frühere Initiierung der Funktionsauslösung kompensiert. Um dabei jedoch ein unnötiges und zu frühzeitiges Auslösen solcher Funktionen zu vermeiden, ist es besonders vorteilhaft, dass die Verringerung der ersten Entfernung nur dann durchgeführt wird, wenn eine Verringerung der zweiten Entfernung, das heißt also der Distanz bis zur Kollision, festgestellt wird. Denn diese zweite Entfernung beinhaltet gewissermaßen auch eine Aussage über die Wahrscheinlichkeit einer Kollision. Hierzu wird zunächst die prognostizierte Distanz bis zur Kollision, das heißt die zweite Entfernung, betrachtet, insbesondere über einen vorbestimmten Zeitraum, der beispielsweise zwischen 100 Millisekunden und 150 Millisekunden bemisst. Wird während dieser Zeitdauer eine Reduktion beziehungsweise Verringerung der Distanz bis zur Kollision festgestellt, so wird der ermittelte minimale Abstand, das heißt die erste Entfernung, zum Beispiel um einen Faktor zu einem neuen minimalen Abstand reduziert, welche die dritte Entfernung bereitgestellt. Hierdurch kann es vorteilhafterweise bewerkstelligt werden, dass eine Reduktion der ersten Entfernung nur dann stattfindet, wenn die Kollisionsgefahr durch Verringerung der zweiten Entfernung als erhöht angesehen werden kann. Bewegt sich das Kraftfahrzeug beispielsweise parallel zu einem Objekt, wie beispielsweise einer Randbebauung oder Bordsteinkante, so wäre in diesem Fall auch die Distanz bis zur Kollision als unendlich anzusehen. In einem solchen Fall wäre es auch unnötig, die erste Entfernung zu reduzieren. Dies hätte nämlich dann zur Folge, dass ein größerer Abstand zu Randbebauungen gehalten werden müsste um eine ständige und unnötige Funktionsauslösung zu vermeiden. Die Erfindung bewerkstelligt es daher, Latenzzeiten effektiv zu kompensieren und damit die Verkehrssicherheit deutlich zu erhöhen, während dennoch unnötige und zu frühzeitige Funktionsauflösungen vermieden werden können.

Die Ermittlung der ersten Entfernung kann beispielsweise auf der Umgebungserfassung durch Umfeldsensoren des Kraftfahrzeugs basieren, die zur Erfassung des Umfelds des Kraftfahrzeugs ausgelegt sind, und mittels welchen Objekte oder Hindernisse in der Umgebung des Kraftfahrzeugs detektiert werden können. Beispielsweise kann ein solcher minimaler Abstand dann kamerabasiert, zum Beispiel mit Stereokameras, ermittelt werden, durch Ultraschallsensoren, Radare, Laserscanner, und so weiter. Weiterhin kann die zweite Entfernung, also die Distanz bis zur Kollision, auf Basis ermittelter Bewegungsparameter, die durch Erfassungsmittel des Kraftfahrzeugs bereitgestellt werden können, berechnet werden. Auf Basis dieser Bewegungsparameter, wie zum Beispiel Geschwindigkeit, Beschleunigung, Lenkwinkeleinschlag, und so weiter, kann ein vorausliegender Fahrbereich prognostiziert werden, in welchem sich das Kraftfahrzeug bewegen wird. Liegt ein detektiertes Objekt innerhalb dieses vorausberechneten Fahrbereichs, so kann entsprechend die kürzeste mögliche Fahrtrajektorie bis zur Kollision ermittelt werden, die entsprechend die Distanz bis zur Kollision, das heißt die zweite Entfernung, darstellt.

Bei einer vorteilhaften Ausgestaltung der Erfindung wird die mindestens eine Funktion derart in Abhängigkeit von der dritten Entfernung aktiviert, dass die Aktivierung der mindestens einen Funktion initiiert wird, wenn die dritte Entfernung kleiner ist als ein vorbestimmter Grenzwert. Wird also beispielsweise die Reduktion der Distanz zur Kollision festgestellt, so wird nicht die eigentliche Distanz zum Objekt mit diesem Grenzwert verglichen, sondern eben diese reduzierte dritte Entfernung, sodass die Funktion deutlich frühzeitiger initiiert und entsprechend dann ausgeführt wird, wenn der eigentliche minimale Abstand, das heißt die erste Entfernung, diesen Grenzwert ungefähr erreicht hat.

Gerade in diesem Zusammenhang bei der Verwendung eines Grenzwerts ist es besonders vorteilhaft zur Kompensation der Latenzzeit die erste Entfernung auf die dritte verringerte Entfernung zu reduzieren anstatt zum Beispiel den Grenzwert selbst zu verändern. Dies hat den Vorteil, dass bei vielzähligen Teilsystemen des Kraftfahrzeugs, die abstandsabhängige Funktionssauslösungen bezogen auf diverse verschiedene Grenzwerte bereitstellen, nicht für alle diese für die jeweiligen Funktionen verschiedenen Grenzwerte entsprechend geändert werden müssen. All diesen Teilsystemen kann nun vorteilhafterweise diese reduzierte dritte Entfernung bereitgestellt werden, die diese Teilsysteme entsprechend behandeln als wäre es der tatsächlich bestimmte minimale Abstand, das heißt die erste Entfernung. Dadurch lässt sich durch eine einmalige Reduktion der ersten Entfernung auf die dritte Entfernung eine Latenzzeitkompensation für alle Teilsysteme des Kraftfahrzeugs bereitstellen, die den minimalen Abstand zu einem Objekt zur Funktionsauslösung verwenden.

Bei einer vorteilhaften Ausgestaltung der Erfindung stellt die mindestens eine Funktion ein Ausgeben eines Warnsignals an den Fahrer dar. Hierdurch kann der Fahrer vorteilhafterweise frühzeitig auf ein Objekt aufmerksam gemacht werden. Dieses Warnsignal kann optisch und/oder akustisch und/oder haptisch ausgegeben werden, beispielsweise durch eine entsprechende Ausgabeeinrichtung des Kraftfahrzeugs. Durch die bewirkte Kompensation der Latenzzeit wird vorteilhafterweise verhindert, dass der Fahrer zu spät auf Objekte aufmerksam gemacht wird.

Bei einer weiteren vorteilhaften Ausgestaltung der Erfindung stellt die mindestens eine Funktion eine Notbremsassistenzfunktion dar, insbesondere gemäß welcher bei Aktivierung das Kraftfahrzeug automatisch verzögert wird. Die Ausführung der Funktion besteht also darin, automatisch einen Bremsvorgang einzuleiten. Durch die erfindungsgemäße Möglichkeit der Kompensation der Latenzzeit wird es auch in diesem Fall vorteilhafterweise bewerkstelligt, dass eine latenzzeitbedingte zu späte Einleitung eines solchen Notbremsvorgangs verhindert werden kann.

Der Grenzwert, mit welchen die dritte Entfernung verglichen wird, kann für verschiedene Funktionen auch verschieden gewählt sein, das heißt für das Ausgeben eines Warnsignals kann ein anderer Grenzwert als für die Notbremsassistenzfunktion gewählt werden. Auch sind zahlreiche weitere Funktionen denkbar, die in Abhängigkeit von der verringerten dritten Entfernung ausgelöst werden können.

Bei einer weiteren vorteilhaften Ausgestaltung der Erfindung wird die zweite Entfernung in Abhängigkeit von mindestens einem erfassten Bewegungsparameter des Kraftfahrzeugs prognostiziert. Auf Basis von Bewegungsparametern des Kraftfahrzeugs, die beispielsweise eine aktuelle Bewegung des Kraftfahrzeugs oder auch die Bewegung des Kraftfahrzeugs in seinem bisherigen zeitlichen Verlauf beschreiben, kann vorteilhafterweise der Bewegungsverlauf extrapoliert werden beziehungsweise eine zukünftige Fahrtrajektorie prognostiziert werden, auf Basis welcher sich die Weglänge bis zur Kollision mit dem Objekt einfach berechnen lässt.

Besonders vorteilhaft ist es dabei, wenn der Bewegungsparameter eine Geschwindigkeit des Kraftfahrzeugs und/oder einen Lenkwinkel des Kraftfahrzeugs darstellt. Bevorzugt werden beide Größen bei der Ermittlung der zweiten Entfernung berücksichtigt. Auch weitere Bewegungsparameter, wie beispielsweise eine Beschleunigung oder Verzögerung des Kraftfahrzeugs zu einem aktuellen Zeitpunkt, können genutzt werden, um den voraussichtlichen Fahrwegverlauf zu prognostizieren und hierdurch auch die zweite Entfernung, das heißt die Distanz bis zur Kollision, zu prognostizieren.

Erfindungsgemäß ist die dritte Entfernung gegenüber einem vorbestimmten Faktor gegenüber der ersten Entfernung verringert. Mit anderen Worten wird die dritte Entfernung durch Multiplikation der ersten Entfernung mit diesem vorbestimmten Faktor bereitgestellt. Dieser Faktor ist entsprechend kleiner 1 und so bemessen, dass durch ihn eine Kompensation der Latenzzeit bereitgestellt werden kann. Der Faktor kann vorteilhafterweise in Abhängigkeit von bestimmten Variablen oder Parametern bestimmt werden, um eine bessere Situationsanpassung zu ermöglichen.

Dabei ist es erfindungsgemäß vorgesehen, dass der Faktor in Abhängigkeit von einer Geschwindigkeit, insbesondere einer aktuellen Geschwindigkeit, des Kraftfahrzeugs vorbestimmt wird. Besonders vorteilhaft ist es dabei, dass diese Abhängigkeit derart ausgestaltet ist, dass eine umso größere Verringerung der dritten Entfernung gegenüber der ersten Entfernung erreicht wird, je größer die Kraftfahrzeuggeschwindigkeit ist. Für eine gegebene Latenzzeit legt ein Kraftfahrzeug bei höherer Geschwindigkeit während dieser Latenzzeit auch eine größere Wegstrecke zurück als bei geringerer Geschwindigkeit. Die korrespondierende Anpassung des Faktors kann diese Wegstreckenunterschiede bei verschiedenen Geschwindigkeiten und somit die entsprechenden Latenzzeiten durch die entsprechenden geschwindigkeitsabhängigen Verringerungen auf besonders angepasste Weise kompensieren.

Der Faktor kann auch in Abhängigkeit noch weiterer Parameter angepasst werden, wie beispielsweise in Abhängigkeit von der zweiten Entfernung oder auch in Abhängigkeit von der Änderung der zweiten Entfernung im vorbestimmten Zeitintervall. Verringert sich beispielsweise die Distanz zur Kollision innerhalb dieses betrachteten vorbestimmten Zeitintervalls sehr schnell, so kann auch ein entsprechend geringerer Faktor gewählt werden, um eine größere Verringerung der dritten Entfernung gegenüber der ersten Entfernung bereitzustellen. Ist die Distanz zur Kollision beispielsweise groß, so kann auch nur eine geringfügige Verringerung der dritten Entfernung gewählt werden, während bei geringer Distanz zur Kollision eine größere Verringerung der dritten Entfernung gegenüber der ersten Entfernung gewählt werden kann.

Die Verringerung der dritten Entfernung gegenüber der ersten Entfernung ist damit vorzugsweise proportional zur Kraftfahrzeuggeschwindigkeit und/oder proportional zur zeitlichen Änderung der zweiten Entfernung und/oder indirekt proportional zur zweiten Entfernung. Hierdurch kann eine auf unterschiedliche Situationen angepasste Kompensation der Latenzzeit bereitgestellt werden. Auch kann der Faktor selbst in Abhängigkeit von der Latenzzeit bestimmt worden sein. Diese wiederum kann beispielsweise gemessen werden, sich aus einem Mittelwert mehrerer Latenzzeitmessungen ergeben, durch Testfahrten bereitgestellt worden sein, oder ähnlichem. Dadurch kann insgesamt sowohl eine übermäßige Kompensation der Latenzzeit wie eine zu geringfügige Kompensation vermieden werden.

Wie bereits eingangs beschrieben ist es vorteilhaft, um eine unnötige oder zu frühzeitige Funktionsauslösung zu vermeiden, die erste Entfernung nur dann auf die dritte Entfernung zu reduzieren, wenn sich die zweite Entfernung, das heißt die Distanz zur Kollision, im vorbestimmten Zeitintervall verringert. Entsprechend stellt es eine vorteilhafte Ausgestaltung der Erfindung dar, dass für den Fall, dass die Überprüfung ergibt, dass sich die zweite Entfernung während des vorbestimmten Zeitintervalls nicht verringert hat, die mindestens eine Funktion des Kraftfahrzeugs in Abhängigkeit von der ersten Entfernung aktiviert wird.

Diese Funktionssauslösung kann dann entsprechend wie zur Funktionsauslösung in Abhängigkeit von der dritten Entfernung entsprechend erfolgen. Vorzugsweise wird entsprechend die mindestens eine Funktion des Kraftfahrzeugs in Abhängigkeit von der ersten Entfernung derart aktiviert, dass die Aktivierung der mindestens einen Funktion initiiert wird, wenn die erste Entfernung kleiner ist als der vorbestimmte Grenzwert. Es wird hier also für den Fall, dass keine Verringerung der Distanz zur Kollision festgestellt wurde, der tatsächlich gemessene minimale Abstand zum Objekt mit dem vorbestimmten Grenzwert verglichen, um zu entscheiden, ob nun die Funktion ausgelöst werden soll oder nicht. Da dadurch, dass keine Verringerung der Distanz zur Kollision stattfindet, die Kollisionsgefahr entsprechend gering einzuschätzen ist, kann somit vorteilhafterweise auf unnötige Vorsichtsmaßnahmen, die zu einer frühzeitigen oder unnötigen Funktionsauslösung führen würden, verzichtet werden.

Bei einer weiteren vorteilhaften Ausgestaltung der Erfindung liegt der vorbestimmte Grenzwert zwischen 0, 1 und 0,5 m, vorzugsweise zwischen 0, 2 und 0,4 m, wie beispielsweise bei 0,3 m. Eine derartige Bemessung des Grenzwerts ist besonders vorteilhaft, wenn es sich bei der Funktion um das Ausgeben des Warnsignals handelt, sowie in Situationen wie Einparkmanövern oder auch beim Ausparken. In anderen Situationen oder für andere Funktionen kann der Grenzwert auch anders bemessen sein.

Ein erfindungsgemäßes Fahrerassistenzsystem für ein Kraftfahrzeug ist dazu ausgelegt ein erfindungsgemäße Verfahren oder eines seiner Ausführungsformen durchzuführen.

Ein erfindungsgemäßes Kraftfahrzeug weist ein erfindungsgemäßes Fahrerassistenzsystem auf. Das Kraftfahrzeug ist vorzugsweise als Personenkraftwagen ausgebildet.

Die mit Bezug auf das erfindungsgemäße Verfahren und seine Ausführungsformen genannten Merkmale, Merkmalskombinationen und deren Vorteile gelten in gleicher Weise für das erfindungsgemäße Fahrerassistenzsystem und das erfindungsgemäße Kraftfahrzeug.

Weiterhin ist es bevorzugt, dass das Kraftfahrzeug zumindest einen Umfeldsensor, wie beispielsweise einen Radarsensor, zur Detektion des mindestens einen Objekts in der Umgebung des Kraftfahrzeugs aufweist. Das Kraftfahrzeug kann auch mehrere und/oder andere Sensoren, wie beispielsweise Kameras, Laserscanner, Radare oder Ähnliches, zur Umfelderfassung aufweisen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Dabei zeigen:
- Fig. 1: eine schematische Darstellung eines Kraftfahrzeugs mit einem Fahrerassistenzsystem zur Aktivierung einer abstandsabhängigen Funktion gemäß einem ersten Ausführungsbeispiel der Erfindung;
- Fig. 2: eine schematische Darstellung des Kraftfahrzeugs gemäß einem zweiten Ausführungsbeispiel der Erfindung;
- Fig. 3: eine schematische Darstellung des Kraftfahrzeugs gemäß einem dritten Ausführungsbeispiel der Erfindung; und
- Fig. 4: ein Ablaufdiagramm zur Veranschaulichung eines Verfahrens zum Aktivieren einer Funktion des Kraftfahrzeugs gemäß einem Ausführungsbeispiel der Erfindung.

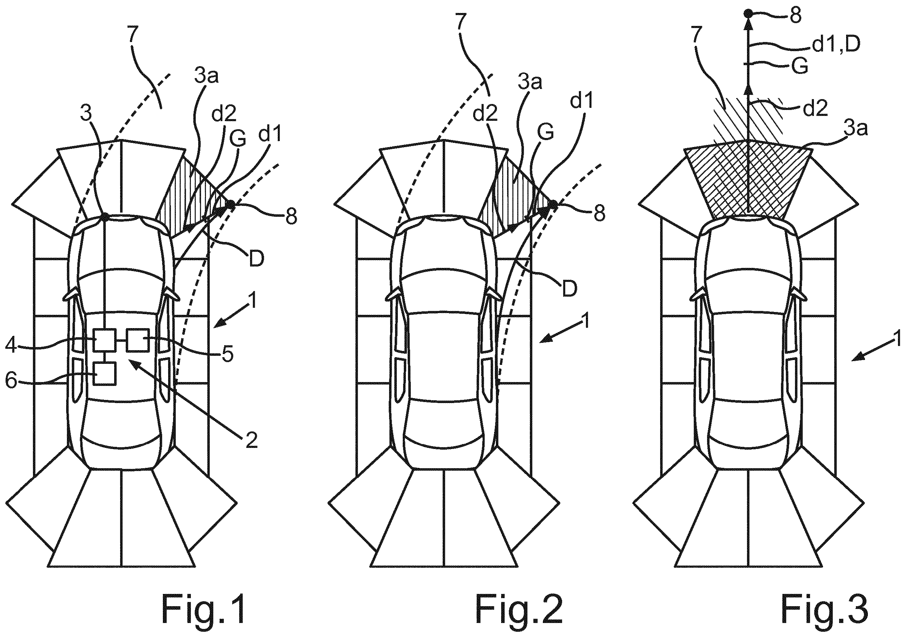

Fig. 1 zeigt eine schematische Darstellung eines Kraftfahrzeugs 1 mit einem Fahrerassistenzsystem 2 zur abstandsabhängigen Auslösung einer Funktion gemäß einem Ausführungsbeispiel der Erfindung. Das Kraftfahrzeug 1 weist in diesem Beispiel exemplarisch einen Umfeldsensor 3 auf, welcher einen Radarsensor und/oder eine Kamera und/oder einen Ultraschallsensor darstellen kann. Insbesondere kann das Kraftfahrzeug 1 auch beliebig viele solcher Sensoren, beispielsweise um das Kraftfahrzeug 1 herum verteilt angeordnet, aufweisen, um eine 360° Umfelderfassung zu ermöglichen. Der dargestellte Umfeldsensor 3 ist hierbei stellvertretend für eine beliebig ausgestaltete Umfeldsensorik mit beliebig vielen Umfeldsensoren anzusehen. Die in Fig. 1 in der Draufsicht um das Kraftfahrzeug 1 herum dargestellten Bereiche sollen dabei die Erfassungsbereiche des Umfeldsensors 3 veranschaulichen, wobei nur einer dieser Bereiche exemplarisch mit dem Bezugszeichen 3a versehen ist. Weiterhin weist das Fahrerassistenzsystem 2 eine Auswerteeinrichtung 4 auf, die dazu ausgelegt ist, die vom Umfeldsensor 3 erfassten Sensordaten auszuwerten und in Abhängigkeit von der Auswertung eine Funktion des Kraftfahrzeugs 1 zu aktivieren. Eine solche Funktion kann beispielsweise das Ausgeben eines Warnsignals an den Fahrer darstellen, zu welchem Zweck das Fahrerassistenzsystem 2 eine entsprechende Ausgabeeinrichtung 5, wie beispielsweise ein Display, einen Lautsprecher oder ähnliches, aufweisen kann. Die Ausgabeeinrichtung 5 kann auch Vibrationselemente zur Ausgabe eines haptischen Signals, wie zum Beispiel über das Lenkrad des Kraftfahrzeugs, aufweisen. Auch kann das Fahrerassistenzsystem 2 mit weiteren Erfassungsmitteln 6 des Kraftfahrzeugs 1 gekoppelt sein, beispielsweise zur Erfassung bestimmter Bewegungsparameter des Kraftfahrzeugs 1, wie der Kraftfahrzeuggeschwindigkeit, dem Lenkwinkel, einer Beschleunigung, und so weiter.

Die mittels des mindestens einen Umfeldsensors 3 des Kraftfahrzeugs 1 erfassten Daten des Umfelds des Kraftfahrzeugs 1 werden durch die Auswerteeinrichtung 4 ausgewertet. Auf Basis der erfassten Daten können Objekte oder Hindernisse, wie das hier exemplarisch mit 8 bezeichnete Objekt in der Umgebung des Kraftfahrzeugs detektiert werden. Weiterhin kann auf Basis dieser erfassten Daten eine erste Entfernung, die einen minimalen Abstand d1 darstellt, ermittelt werden. Dieser minimale Abstand d1 stellt also die kürzeste Entfernung zwischen dem Kraftfahrzeug 1 und dem Objekt 8 dar. Weiterhin wird auch eine zweite Entfernung, die eine Distanz D bis zur Kollision darstellt, prognostiziert. Diese Distanz D gibt damit die Weglänge an, die das Kraftfahrzeug ausgehend von seiner aktuellen Position bis zur Kollision mit dem Objekt 8 fahren muss. Diese Distanz D wird auf Basis der ermittelten Bewegungsparameter, die durch die Erfassungsmittel 6 des Kraftfahrzeugs 1 bereitgestellt werden, berechnet. Auf Basis dieser Bewegungsparameter kann die Auswerteeinrichtung 4 einen vorausliegenden Fahrbereich 7 beziehungsweise eine Fahrkurve berechnen. Liegt das detektierte Objekt 8 innerhalb dieses vorausberechneten Fahrbereichs 7, so kann entsprechend die kürzeste mögliche Fahrtrajektorie bis zur Kollision ermittelt werden, die entsprechend die Distanz D bis zur Kollision darstellt.

Üblicherweise ist es so, dass bei Kollisionswarnsystemen ein Grenzwert vorgegeben wird, und falls dieser Grenzwert vom ermittelten Abstand zum Objekt unterschritten wird, eine Funktion ausgelöst wird, wie beispielsweise ein Warnsignal ausgegeben wird. Liegt dieser Grenzwert beispielsweise bei 30 Zentimeter so wird eine Funktionsauslösung initiiert, sobald der erfasste Abstand diese 30 Zentimeter unterschreitet. Bis es aber zur tatsächlichen Ausführung der Funktion, wie beispielsweise das tatsächliche Ausgeben des Warnsignals kommt, vergeht jedoch eine bestimmte Latenzzeit, während welcher sich das Kraftfahrzeug weiterhin fortbewegt, sodass letztendlich bei der Ausgabe des Warnsignals die Distanz zum Objekt nicht mehr 30 Zentimeter sondern zum Beispiel nur noch 27 Zentimeter oder 25 Zentimeter beträgt. Dies kann unter Umständen dazu führen, dass ein Fahrer nicht mehr rechtzeitig reagieren kann und eine Kollision unvermeidbar wird.

Um dies zu vermeiden, können gemäß diesem Ausführungsbeispiel der Erfindung vorteilhafterweise solche Latenzzeiten kompensiert werden, wodurch eine rechtzeitige Aktivierung einer Funktion ermöglicht wird und gleichzeitig unnötige oder zu frühzeitige Aktivierungen verhindert werden. Dies wird nun wie folgt bewerkstelligt. Hierzu wird zunächst die prognostizierte Distanz D bis zur Kollision betrachtet, insbesondere über einen vorbestimmten Zeitraum, der vorzugsweise zwischen 100 Millisekunden und 150 Millisekunden bemisst. Wird während dieser Zeitdauer eine Reduktion beziehungsweise Verringerung der Distanz D bis zur Kollision festgestellt, so wird der ermittelte minimale Abstand d1 um einen Faktor zu einem neuen minimalen Abstand d2 reduziert, welche eine dritte Entfernung bereitgestellt. Bei der weiteren Verarbeitung, insbesondere bei der Funktionsauslösung, wird nun dieser neue reduzierte minimale Abstand d2 behandelt als wäre es der tatsächlich gemessene oder bestimmte minimale Abstand d1. Anstatt den eigentlich bestimmten minimalen Abstand d1 mit einem vorgegebenen Grenzwert G zu vergleichen wird nun der neue reduzierte minimale Abstand d2 mit diesem Grenzwert G verglichen. Unterschreitet dabei dieser neue minimale Abstand d2 den vorbestimmten Grenzwert G so wird die entsprechende Funktion ausgelöst, die beispielsweise durch das Ausgeben eines Warnsignals an den Fahrer bereitgestellt sein kann oder auch durch das Auslösen einer Notbremsung, oder ähnlichem. Hierdurch kann eine frühere Funktionsauslösung bereitgestellt werden, als wenn der Zeitpunkt der Funktionsauslösung anhand des eigentlich bestimmten minimalen Abstand d1 bemessen wäre. Auch dies ist in Fig.1 veranschaulicht. Wie zu sehen ist, ist der eigentlich bestimmte minimale Abstand d1 in diesem Beispiel noch größer als der vorbestimmte Grenzwert G. Bei herkömmlichen Verfahren würde es daher noch nicht zu einer Funktionsauslösung kommen. Der reduzierte minimale Abstand d2 ist dagegen bereits kleiner als der Grenzwert G, so dass es in diesem Beispiel zu einer Funktionsauslösung kommt. Durch die Reduktion des minimalen Abstands d1 auf den reduzierten minimalen Abstand d2 wird so effektiv bewirkt, dass Funktionssauslösungen früher initiiert werden in Situationen, in denen die Kollisionsgefahr als erhöht klassifiziert wird, was auf Basis der festgestellten Verringerung der Distanz D zur Kollision festgestellt werden kann.

Wird dagegen festgestellt, dass sich während der vorbestimmten Zeitdauer die Distanz D bis zur Kollision nicht verringert, also beispielsweise gleich bleibt oder sich sogar erhöht, so wird der minimale Abstand d1 nicht reduziert, und um zu überprüfen, ob eine Funktionsauslösung nötig ist oder nicht, dieser eigentlich bestimmte minimale Abstand d1 mit dem Grenzwert G verglichen.

Fig. 2 zeigt ebenfalls eine schematische Darstellung des Kraftfahrzeugs 1 aus Fig. 1 in einer etwas anderen Situation gemäß einem weiteren Ausführungsbeispiel der Erfindung. Das Kraftfahrzeug 1 kann hierbei wiederum wie zu Fig. 1 beschrieben ausgebildet sein. Auch die zu Fig. 1 beschriebene Vorgehensweise bei der Funktionsauslösung ist die gleiche. In diesem Beispiel in Fig. 2 wurde jedoch eine andere Distanz D bis zur Kollision mit dem Objekt 8 prognostiziert. In diesem Beispiel wurde auf Basis der durch die Erfassungsmittel 6 bereitgestellten Bewegungsparameter des Kraftfahrzeugs 1 berechnet, dass keine Kollisionsgefahr mit der Fahrzeugfront des Fahrzeugs 1 wie in Fig. 1 dargestellt, besteht, sondern stattdessen mit dem Heck des Kraftfahrzeugs 1.

Fig. 3 zeigt ebenso eine schematische Darstellung des Kraftfahrzeugs 1 aus Fig. 1, wiederum in einer anderen Situation, gemäß einem weiteren Ausführungsbeispiel der Erfindung. In diesem Beispiel ist nun das detektierte Objekt 8 nicht seitlich in Bezug auf das Kraftfahrzeug angeordnet, sondern liegt in Fahrtrichtung direkt voraus. In diesem Beispiel stimmen entsprechend der durch den mindestens einen Umfeldsensor 3 erfasste minimale Abstand d1 zwischen Kraftfahrzeug 1 und dem Objekt 8 und die Distanz D bis zur Kollision überein. Bewegt sich in diesem Beispiel das Kraftfahrzeug weiter fort, so reduziert sich die Distanz D bis zur Kollision. Entsprechend wird auch hierbei der bestimmte minimale Abstand d1 wiederum einen Faktor auf den reduzierten minimalen Abstand d2 verringert und mit dem Grenzwert G verglichen. Ist dieser reduzierte Abstand d2 kleiner als der Grenzwert G, so wird entsprechend eine Funktion aktiviert.

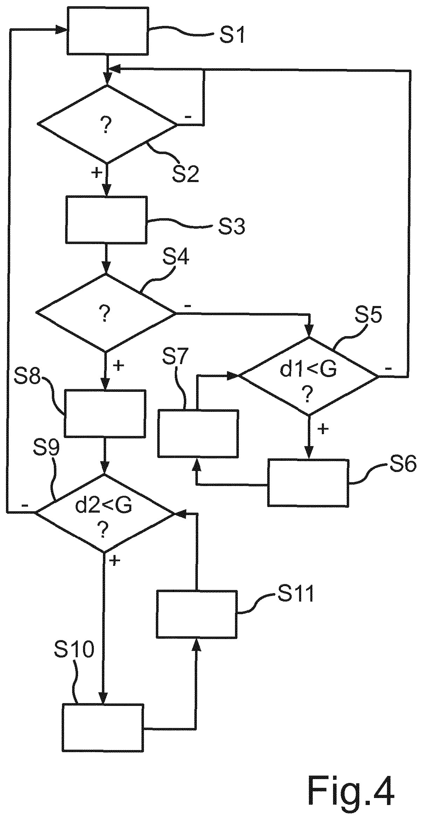

Fig. 4 zeigt ein Ablaufdiagramm zur Veranschaulichung eines Verfahrens zum Aktivieren einer Funktion eines Kraftfahrzeugs gemäß einem Ausführungsbeispiel der Erfindung. Das Verfahren beginnt in Schritt S1, in welchen zunächst ein vorbestimmter Grenzwert G festgelegt wird. Weiterhin wird in Schritt S2 überprüft, ob ein Objekt 8 in der Umgebung des Kraftfahrzeugs 1 detektiert wurde. Ist dies nicht der Fall, so erfolgt diese Überprüfung in Schritt S2 so lange, bis dies der Fall ist. Entsprechend wird dann zur Schritt S3 übergegangen, in welchem zum einen der minimale Abstand d1 des Kraftfahrzeugs 1 zum Objekt 8 berechnet wird, sowie die Distanz D bis zur Kollision des Kraftfahrzeugs 1 mit dem Objekt 8 prognostiziert wird. Anschließend wird in Schritt S4 überprüft, ob sich die Distanz D innerhalb eines vorbestimmten Beobachtungszeitraums verringert hat. Ist dies nicht der Fall, so wird in Schritt S5 überprüft, ob der bestimmte minimale Abstand d1 kleiner ist als der vorher festgelegte Grenzwert G ist. Ist dies der Fall, so wird in Schritt S6 das Auslösen einer Funktion, wie zum Beispiel das Ausgeben eines Warnsignals, initiiert. Daraufhin wird in Schritt S7 der minimale Abstand d1 neu berechnet und wiederum in Schritt S5 überprüft, ob der wiederum aktuelle minimale Abstand d1 kleiner ist als der Grenzwert G.

Mit anderen Worten wird das Warnsignal so lange ausgegeben, so lange der minimale Abstand d1 den Grenzwert G unterschreitet. Wird dagegen in Schritt S5 festgestellt, dass der minimale Abstand d1 Grenzwert G nicht unterschreitet, so wird wieder von vorne begonnen und in Schritt S2 wiederum überprüft, ob das Objekt 8 weiterhin detektiert wird.

Wird in Schritt S4 dagegen festgestellt, dass ich die Distanz D während des vorbestimmten Betrachtungszeitraums, wie beispielsweise ein Zeitraum zwischen 100 Millisekunden bis 150 Millisekunden, verringert hat, so wird in Schritt S8 der ermittelte minimale Abstand d1 um einen Faktor auf einen neuen verringerten minimalen Abstand d2 reduziert. Anschließend wird in Schritt S9 überprüft, ob dieser reduzierte minimale Abstand d2 den Grenzwert G unterschreitet. Ist dies der Fall, so wird in Schritt S10 die entsprechende Funktion aktiviert, und wiederum beispielsweise ein Warnsignal ausgegeben. Auch hier ist es vorzugsweise vorgesehen, dass dieses Warnsignal so lange ausgegeben wird, oder im Allgemeinen die Funktion solange aktiviert bleibt, wie der reduzierte minimale Abstand d2 den Grenzwert G unterschreitet. Die Berechnung des Grenzwerts G für diese Zeitdauer basiert auf in jedem Zeitschritt aktuell gewonnenen Messdaten, wie durch Schritt S11 veranschaulicht ist. Wird dagegen in Schritt S9 festgestellt, dass der reduzierte Abstand d2 den Grenzwert G nicht unterschreitet, wird wieder von vorne begonnen und überprüft, ob das Objekt 8 oder auch weitere andere Objekte detektiert werden.

Die Festlegung des Grenzwerts G muss hierbei nicht notwendigerweise im ersten Schritt S1 erfolgen, sondern kann an beliebiger Stelle vorgesehen sein, solange dies vor den Vergleichen in Schritt S9 oder S5 erfolgt. Vorteilhaft ist es auch, den Grenzwert G in Abhängigkeit von der aktuellen Fahrzeuggeschwindigkeit zu bestimmen, sowie optional auch in Abhängigkeit von der in Schritt S3 ermittelten Distanz D bis zur Kollision. Hierdurch kann eine optimale Situationsanpassung zur Kompensation der Latenzzeiten bewerkstelligt werden.

## Patentansprüche

1. Verfahren zum Aktivieren mindestens einer Funktion eines Kraftfahrzeugs (1) mit den Schritten:
- Bestimmen einer ersten Entfernung (d1) des Kraftfahrzeugs (1) zu mindestens einem Objekt (8) in einer Umgebung des Kraftfahrzeugs (1), wobei die erste Entfernung (d1) einen minimalen Abstand zwischen dem Kraftfahrzeug (1) und dem mindestens einen Objekt (8) darstellt;
- Prognostizieren einer zweiten Entfernung (D), die eine Weglänge von einer aktuellen Position des Kraftfahrzeugs (1) bis zu einer Kollision mit dem mindestens einen Objekt (8) darstellt;
- Überprüfen, ob sich die zweite Entfernung (D) innerhalb einer vorbestimmten Zeitdauer verringert;
- Falls die Überprüfung ergibt, dass sich die zweite Entfernung (D) verringert, Verringern der bestimmten ersten Entfernung (d1) durch Multiplikation der bestimmten ersten Entfernung (d1) mit einem vorbestimmten Faktor, wodurch eine verringerte dritte Entfernung (d2) bereitgestellt wird, wobei der Faktor in Abhängigkeit von einer Geschwindigkeit des Kraftfahrzeugs (1) vorbestimmt wird; und
- Aktivieren der mindestens einen Funktion des Kraftfahrzeugs (1) in Abhängigkeit von der verringerten dritten Entfernung (d2) zur Kompensation einer Latenzzeit zwischen einem Initiieren des Aktivierens der mindestens einen Funktion und einem Ausführen der mindesten einen Funktion.

2. Verfahren nach Anspruch 1,
**dadurch gekennzeichnet, dass**
die mindestens eine Funktion derart in Abhängigkeit von der dritten Entfernung (d2) aktiviert wird, dass die Aktivierung der mindestens einen Funktion initiiert wird, wenn die dritte Entfernung (d2) kleiner ist als ein vorbestimmter Grenzwert (G).

3. Verfahren nach einem der vorhergehenden Ansprüche,
**dadurch gekennzeichnet, dass**
die mindestens eine Funktion ein Ausgeben eines Warnsignals an den Fahrer darstellt.

4. Verfahren nach einem der vorhergehenden Ansprüche,
**dadurch gekennzeichnet, dass**
die mindestens eine Funktion eine Notbremsassistenzfunktion darstellt, insbesondere gemäß welcher bei Aktivierung das Kraftfahrzeug (1) automatisch verzögert wird.

5. Verfahren nach einem der vorhergehenden Ansprüche,
**dadurch gekennzeichnet, dass**
die zweite Entfernung (D) in Abhängigkeit von mindestens einem erfassten Bewegungsparameter des Kraftfahrzeugs (1) prognostiziert wird.

6. Verfahren nach Anspruch 5,
**dadurch gekennzeichnet, dass**
der Bewegungsparameter eine Geschwindigkeit des Kraftfahrzeugs (1) und/oder einen Lenkwinkel des Kraftfahrzeugs (1) darstellt.

7. Verfahren nach einem der vorhergehenden Ansprüche,
**dadurch gekennzeichnet, dass**
für den Fall, dass die Überprüfung ergibt, dass sich die zweite Entfernung (D) während des vorbestimmten Zeitintervalls nicht verringert hat, die mindestens eine Funktion des Kraftfahrzeugs (1) in Abhängigkeit von der ersten Entfernung (d1) aktiviert wird.

8. Verfahren nach Anspruch 7,
**dadurch gekennzeichnet, dass**
die mindestens eine Funktion des Kraftfahrzeugs (1) in Abhängigkeit von der ersten Entfernung (d1) derart aktiviert wird, dass die Aktivierung der mindestens einen Funktion initiiert wird, wenn die erste Entfernung (d1) kleiner ist als der vorbestimmte Grenzwert (G).

9. Verfahren nach einem der vorhergehenden Ansprüche,
**dadurch gekennzeichnet, dass**
der vorbestimmte Grenzwert (G) zwischen 0,1 und 0,5 Metern liegt, vorzugsweise zwischen 0,2 und 0,4 Metern.

10. Fahrerassistenzsystem (2) für ein Kraftfahrzeug (1), mit einer Auswerteeinrichtung (4), die dazu ausgelegt ist, von einem Umfeldsensor (3) erfasste Sensordaten auszuwerten und in Abhängigkeit von der Auswertung eine Funktion des Kraftfahrzeugs (1) zu aktivieren, wobei das Fahrerassistenzsystem (2) weiterhin dazu ausgelegt ist, ein Verfahren nach einem der vorhergehenden Ansprüche durchzuführen.

11. Kraftfahrzeug (1) mit einem Fahrerassistenzsystem (2) nach Anspruch 10.

12. Kraftfahrzeug (1) nach Anspruch 11,
**dadurch gekennzeichnet, dass**
das Kraftfahrzeug (1) zumindest einen Umfeldsensor (3) zur Detektion des mindestens einen Objekts (8) in der Umgebung des Kraftfahrzeugs (1) aufweist.

## Claims

1. Method for activating at least one function of a motor vehicle (1), having the steps of:
- determining a first distance (d1) between the motor vehicle (1) and at least one object (8) in an environment of the motor vehicle (1), wherein the first distance (d1) represents a minimum spacing between the motor vehicle (1) and the at least one object (8);
- predicting a second distance (D) representing a travel distance from a current position of the motor vehicle (1) to a collision with the at least one object (8);
- checking whether the second distance (D) decreases within a predetermined period of time;
- if the check reveals that the second distance (D) decreases, decreasing the determined first distance (d1) by multiplying the determined first distance (d1) by a predetermined factor, thereby providing a decreased third distance (d2), wherein the factor is predetermined on the basis of a speed of the motor vehicle (1); and
- activating the at least one function of the motor vehicle (1) on the basis of the decreased third distance (d2) in order to compensate for a latency between initiating the activation of the at least one function and performing the at least one function.

2. Method according to Claim 1,
**characterized in that**
the at least one function is activated on the basis of the third distance (d2) in such a way that the activation of the at least one function is initiated when the third distance (d2) is less than a predetermined limit value (G).

3. Method according to one of the preceding claims,
**characterized in that**
the at least one function involves outputting a warning signal to the driver.

4. Method according to one of the preceding claims,
**characterized in that**
the at least one function is an emergency braking assistance function, in particular according to which the motor vehicle (1) is automatically decelerated when activated.

5. Method according to one of the preceding claims,
**characterized in that**
the second distance (D) is predicted on the basis of at least one captured motion parameter of the motor vehicle (1).

6. Method according to Claim 5,
**characterized in that**
the motion parameter is a speed of the motor vehicle (1) and/or a steering angle of the motor vehicle (1).

7. Method according to one of the preceding claims,
**characterized in that**
if the check reveals that the second distance (D) has not decreased during the predetermined time interval, the at least one function of the motor vehicle (1) is activated on the basis of the first distance (d1).

8. Method according to Claim 7,
**characterized in that**
the at least one function of the motor vehicle (1) is activated on the basis of the first distance (d1) in such a way that the activation of the at least one function is initiated when the first distance (d1) is less than the predetermined limit value (G).

9. Method according to one of the preceding claims,
**characterized in that**
the predetermined limit value (G) is between 0.1 and 0.5 metres, preferably between 0.2 and 0.4 metres.

10. Driver assistance system (2) for a motor vehicle (1), having an evaluation device (4) which is designed to evaluate sensor data captured by an environmental sensor (3) and to activate a function of the motor vehicle (1) on the basis of the evaluation, wherein the driver assistance system (2) is further designed to carry out a method according to one of the preceding claims.

11. Motor vehicle (1) having a driver assistance system (2) according to Claim 10.

12. Motor vehicle (1) according to Claim 11,
**characterized in that**
the motor vehicle (1) has at least one environmental sensor (3) for detecting the at least one object (8) in the environment of the motor vehicle (1).

## Revendications

1. Procédé d'activation d'au moins une fonction d'un véhicule automobile (1), comprenant les étapes suivantes :
- déterminer une première distance (d1) du véhicule automobile (1) par rapport à au moins un objet (8) dans un environnement du véhicule automobile (1), la première distance (d1) représentant une distance minimale entre le véhicule automobile (1) et ledit au moins un objet (8) ;
- prévoir une deuxième distance (D), qui représente une longueur de trajet entre une position actuelle du véhicule automobile (1) et une collision avec ledit au moins un objet (8) ;
- vérifier si la deuxième distance (D) diminue au cours d'une période de temps prédéterminée ;
- si la vérification indique que la deuxième distance (D) diminue, réduire la première distance déterminée (d1) en multipliant la première distance déterminée (d1) par un facteur prédéterminé, fournissant ainsi une troisième distance réduite (d2), le facteur étant prédéterminé en fonction d'une vitesse du véhicule automobile (1) ; et
- activer ladite au moins une fonction du véhicule automobile (1) en fonction de ladite troisième distance réduite (d2) afin de compenser un temps de latence entre un déclenchement de l'activation de ladite au moins une fonction et une exécution de ladite au moins une fonction.

2. Procédé selon la revendication 1,
**caractérisé en ce que**
ladite au moins une fonction est activée en fonction de la troisième distance (d2) de telle sorte que l'activation de ladite au moins une fonction est initiée lorsque la troisième distance (d2) est inférieure à une valeur limite prédéterminée (G).

3. Procédé selon l'une des revendications précédentes,
**caractérisé en ce que**
ladite au moins une fonction consiste à émettre un signal d'avertissement à l'attention du conducteur.

4. Procédé selon l'une des revendications précédentes,
**caractérisé en ce que**
ladite au moins une fonction est une fonction d'assistance au freinage d'urgence, notamment selon laquelle, lorsqu'elle est activée, le véhicule automobile (1) est automatiquement décéléré.

5. Procédé selon l'une des revendications précédentes,
**caractérisé en ce que**
la deuxième distance (D) est prédite en fonction d'au moins un paramètre de mouvement détecté du véhicule automobile (1).

6. Procédé selon la revendication 5,
**caractérisé en ce que**
le paramètre de mouvement représente une vitesse du véhicule automobile (1) et/ou un angle de braquage du véhicule automobile (1).

7. Procédé selon l'une des revendications précédentes,
**caractérisé en ce que**
dans le cas où la vérification révèle que la deuxième distance (D) n'a pas diminué pendant l'intervalle de temps prédéterminé, ladite au moins une fonction du véhicule automobile (1) est activée en fonction de la première distance (d1).

8. Procédé selon la revendication 7,
**caractérisé en ce que**
ladite au moins une fonction du véhicule automobile (1) est activée en fonction de la première distance (d1) de telle sorte que l'activation de ladite au moins une fonction est initiée lorsque la première distance (d1) est inférieure à la valeur limite prédéterminée (G).

9. Procédé selon l'une des revendications précédentes,
**caractérisé en ce que**
la valeur limite prédéterminée (G) est comprise entre 0,1 et 0,5 mètre, de préférence entre 0,2 et 0,4 mètre.

10. Système d'assistance à la conduite (2) pour un véhicule automobile (1), comprenant un dispositif d'évaluation (4) conçu pour évaluer des données de capteur enregistrées par un capteur d'environnement (3) et pour activer une fonction du véhicule automobile (1) en fonction de l'évaluation, le système d'assistance à la conduite (2) étant en outre conçu pour mettre en œuvre un procédé selon l'une des revendications précédentes.

11. Véhicule automobile (1) comprenant un système d'aide à la conduite (2) selon la revendication 10.

12. Véhicule automobile (1) selon la revendication 11,
**caractérisé en ce que**
le véhicule automobile (1) comporte au moins un capteur d'environnement (3) pour détecter ledit au moins un objet (8) dans l'environnement du véhicule automobile (1).
